# EUROPÄISCHE PATENTSCHRIFT

(11) **EP 0 779 438 B1**
(45) Veröffentlichungstag und Bekanntmachung des Hinweises auf die Patenterteilung: **13.06.2001**
(21) Anmeldenummer: 96117900.9
(22) Anmeldetag: 08.11.1996
(51) Int. Cl.: F16B 13/14

(54) **Traganker zur Befestigung einer Vorsatzschale an einer Tragschale**
Supporting anchor for fastening an outer shell wall to a supporting shell wall
Ancrage de support pour fixer une paroi extérieure à une paroi support

(30) Priorität: 15.12.1995 DE 19546844
(43) Veröffentlichungstag der Anmeldung: 18.06.1997
(73) Patentinhaber: UPAT GMBH & CO, D-79312 Emmendingen (DE)
(72) Erfinder: Frischmann, Albert, 79341 Kenzingen (DE); Mauz, Joachim, 79312 Emmendingen (DE); Pfaff, Arno, 78120 Furtwangen (DE)

(56) Entgegenhaltungen:
- EP-A- 0 316 199
- EP-A- 0 330 114
- EP-A- 0 351 668
- FR-A- 2 223 587
- GB-A- 2 145 459

## Beschreibung

Die Erfindung betrifft einen Traganker zur Befestigung einer Vorsatzschale an einer Tragschale mit durch Dichtringe abgetrennten Verankerungsbereichen, die mit einer aushärtbaren Masse auffüllbar sind, gemäß der Gattung des Anspruches 1.

Aus der EP-A-0 351 668 ist ein gattungsgemäßer Traganker bekannt, der aus einem Stahlrohr besteht, das mit einem Abschnitt in der Tragschale und mit dem anderen Abschnitt in der Vorsatzschale mittels einer aushärtbaren Masse verankerbar ist. Die Verankerungsbereiche werden durch auf dem Stahlrohr aufgesetzte Kunststoffteile gebildet, an denen die Verankerungsbereiche abgrenzenden Dichtringe angeordnet sind. Die Befüllung beider Verankerungsbereiche erfolgt durch das Rohr in einem Befüllungsvorgang, wobei der Verankerungsbereich in der Tragschale durch Austritt der Masse aus dem vorderen Ende des Tragrohrs und die Befüllung des Verankerungsbereichs in der Vorsatzschale durch Austritt aus seitlichen Öffnungen im Rohr erfolgt. Da beide Verankerungsbereiche gleichzeitig befüllt werden, ist es weder möglich, für die Verankerung in der Trag- und Vorsatzschale unterschiedliche Verbundmassen zu verwenden, noch den Traganker zunächst nur in der Tragschale zu verankern, was beispielsweise bei Sanierungsprojekten durchaus zweckmäßig sein kann. Des weiteren zeigt die Druckschrift keine Möglichkeit auf, die vollständige Befüllung beider Verankerungsbereiche an der Außenfläche der Vorsatzschale zu kontrollieren.

Bei dem aus der DE-OS 25 56 493 und der FR-A-2 223 587 bekannten Traganker sind die im Abstand zueinander angeordneten und zur Begrenzung der Verankerungsbereiche dienenden Dichtringe in umlaufende Nuten des Tragankers eingelassen und dort fest positioniert. Damit sind bereits bei der Fertigung des Tragankers sowohl die Länge der Verankerungsbereiche als auch deren Positionierung auf dem Traganker unveränderbar festgelegt. Da sowohl die Wandungsdicken der Vorsatzschalen als auch die Abstände der Vorsatzschalen zur Tragschale je nach Anwendungsfall unterschiedlich sein können, ergeben sich für den bekannten Traganker Einschränkungen in seinem Anwendungsbereich. Die Anpassung des Tragankers an die bestehenden Verhältnisse eines Bauprojektes umfaßt den gesamten Traganker, da die Dichtringe herstellerseitig am Traganker angebracht und positioniert werden müssen. Damit erhöht sich der Fertigungs- und Dispositionsaufwand insbesondere bei Sanierungsprojekten.

Die EP-A-0 316 199 beschreibt ein Befestigungselement in Form einer Gewindestange, auf der zur Abdichtung der Verankerungsbereiche Scheiben mit Innengewinde durch Drehen axial verschiebbar und einzeln auf der Gewindestange positionierbar sind. Die Überbrückung des Abstands zwischen der Trag- und Vorsatzschale erfolgt über ein Kunststoffrohr, das in der Tragschale gleichzeitig auch die Abdichtung des Verankerungsbereiches übernimmt. Dazu ist eine Stufenbohrung in der Tragschale erforderlich, deren Durchmesser dem Außendurchmesser des Kunststoffrohres entspricht. Über ein Zuführrohr werden die einzelnen Verankerungsbereiche befüllt, wobei durch Verdrehen der Scheiben nach dem Zurückziehen des Zuführrohres die Verankerungsbereiche anschließend voneinander abgegrenzt werden. Allerdings zeigt auch diese Druckschrift keine Möglichkeit auf, die vollständige Befüllung beider Verankerungsbereiche zu kontrollieren. Lediglich die Befüllung des Verankerungsbereichs in der Tragschale ist durch Austritt der Masse aus einer Öffnung in der äußeren Abdichtscheibe kontrollierbar.

Der Erfindung liegt die Aufgabe zugrunde, einen montagefreundlichen und wirtschaftlich herstellbaren Traganker zur Befestigung einer Vorsatzschale an einer Tragschale zu schaffen, der durch einfache Anpassungsmöglichkeit an verschiedene Verhältnisse einen breiten Anwendungsbereich abdeckt und eine Befüllkontrolle beider Verankerungsbereiche ermöglicht.

Die Lösung dieser Aufgabe wird durch die im Anspruch 1 angegebenen Merkmale erreicht.

Üblicherweise werden die Traganker zur Sicherung und Instandsetzung bereits montierter Fassadenkonstruktionen verwendet. Zur Montage des Tragankers wird durch die Vorsatzschale hindurch in die Tragschale ein Bohrloch erstellt, dessen Durchmesser dem Außendurchmesser der Dichtringe entspricht. In das Bohrloch der Tragschale wird eine aushärtbare Masse eingefüllt. Danach wird der Traganker mit dem übergestülpten Kunststoffteil soweit in das Bohrloch eingeführt, bis der erste Dichtring sich im Bohrloch der Tragschale befindet. Durch mehr oder weniger weites Einschieben des Kunststoffteiles wird sichergestellt, daß der ebenfalls durch Dichtringe begrenzte vordere Verankerungsbereich sich innerhalb der Bohrung in der Vorsatzschale befindet. Danach wird dieser Verankerungsbereich ebenfalls mit der aushärtbaren Masse ausgefüllt, so daß nach dem Aushärten der Masse eine spannungsfreie Verankerung in der Trag- und Vorsatzschale erreicht ist. Der Traganker nimmt somit die auf die Vorsatzschale wirkenden Schub- und Zugkräfte auf.

Reicht,in einzelnen Fällen die Anpassungsmöglichkeit des Tragankers durch Verschieben im Bohrloch nicht aus, so ist es lediglich erforderlich, über den Traganker ein anderes Kunststoffteil überzustülpen, dessen Dichtringe über die Stege und/oder Manschetten in einem anderen Abstand zueinander fixiert sind.

In einer weiteren Ausgestaltung der Erfindung kann die Abstandsregulierung der Dichtringe auch über teleskopartig zusammenschieb- und verrastbare Stege und/oder Manschetten des Kunststoffteiles erfolgen. Damit können mit ein und demselben Kunststoffteil sowohl die Länge der Verankerungsbereiche als auch der Abstand zwischen den Verankerungsbereichen in Anpassung an die vorliegenden Dicken- und Abstandsverhältnisse der Vorsatz- und Tragschale verändert werden.

Der hintere in der Tragschale und der vordere in der Vorsatzschale gebildete Verankerungsbereich werden zweckmäßigerweise separat befüllt. Während die Befüllung des hinteren Verankerungsbereiches durch Aufsteigen der Masse vom Bohrlochgrund in Richtung Bohrlochmündung beim Einschieben des Tragankers in das mit der Masse teilweise befüllten Bohrloch erfolgt, wird zur Befüllung des vorderen Verankerungsbereiches die Masse durch eine Füllbohrung im vorderen Teil des Tragankers eingespritzt. Durch das getrennte und unterschiedliche Füllungsverfahren der beiden Verankerungsbereiche kann auf einen den Traganker vollständig durchquerenden und insbesondere in einem Edelstahl-Traganker schwer herstellbaren Füllkanal verzichtet werden. Durch den kürzeren, nur in den vorderen Verankerungsbereich mündenden Füllkanal kann eine Verbundmasse mit höherer Viskosität und damit kürzerer Aushärtzeit verwendet werden.

Zur Befüllungskontrolle des hinteren Verankerungsbereiches ist es zweckmäßig, am Traganker einen vom hinteren Verankerungsbereich ausgehenden und bis zur Stirnseite des Tragankers geführten Verbindungskanal anzuordnen. Zweckmäßigerweise ist der Verbindungskanal als Längsnut entlang der Innenseite eines Steges und der Manschette angeordnet.

Als Füllkontrolle sind im Randbereich der Abschlußscheibe Öffnungen angeordnet, die mit den Verankerungsbereichen verbunden sind. Ferner weist die Abschlußscheibe eine axial abstehende Grifflasche auf, mit der das Kunststoffteil auf dem Traganker verdreht und ausgerichtet werden kann.

In der Zeichnung sind Ausführungsbeispiele der Erfindung dargestellt.
- Figur 1: den erfindungsgemäßen Traganker in Sicht
- Figur 2: das Kunststoffteil in Sicht
- Figur 3: den gesetzten Traganker mit befülltem, hinteren Verankerungsbereich
- Figur 4: den gesetzten Traganker gemäß Figur 1 während der Befüllung des vorderen Verankerungsbereiches
- Figur 5: eine abgewandelte Ausführung des Tragankers
- Figur 6: das Kunststoffteil gemäß Figur 2 mit einer Rastverbindung

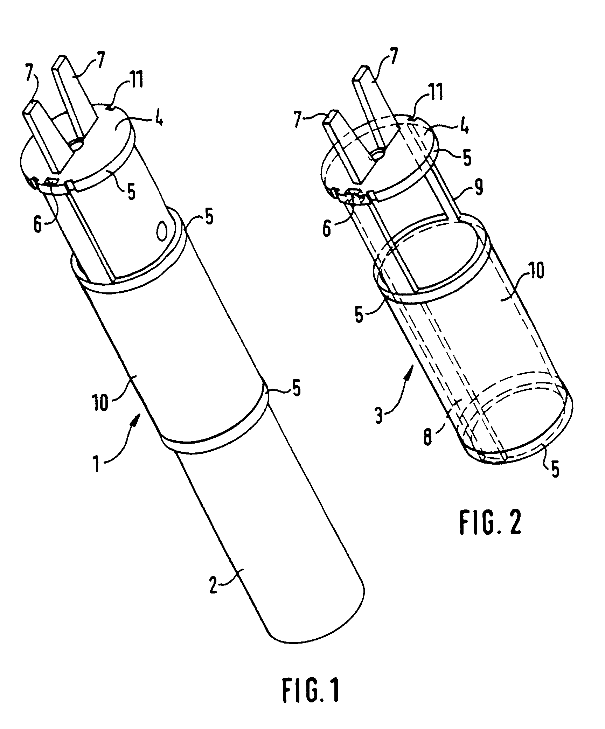

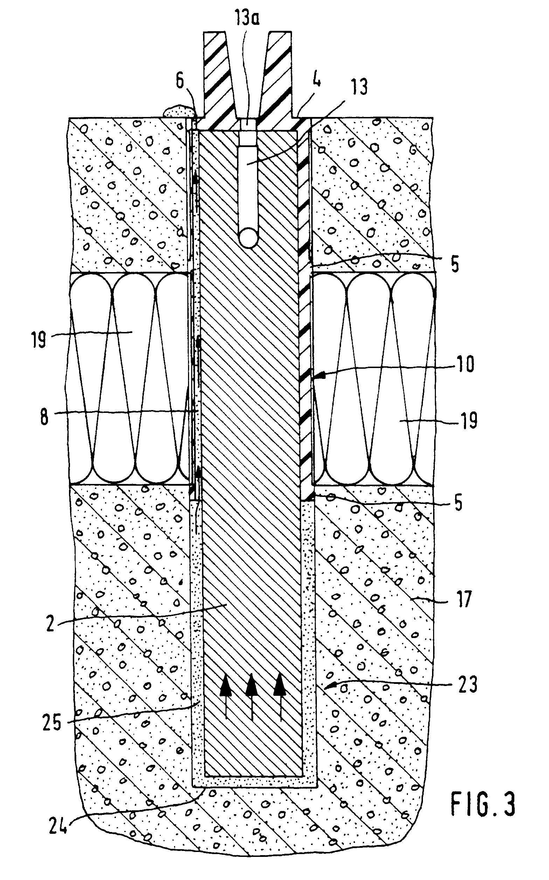

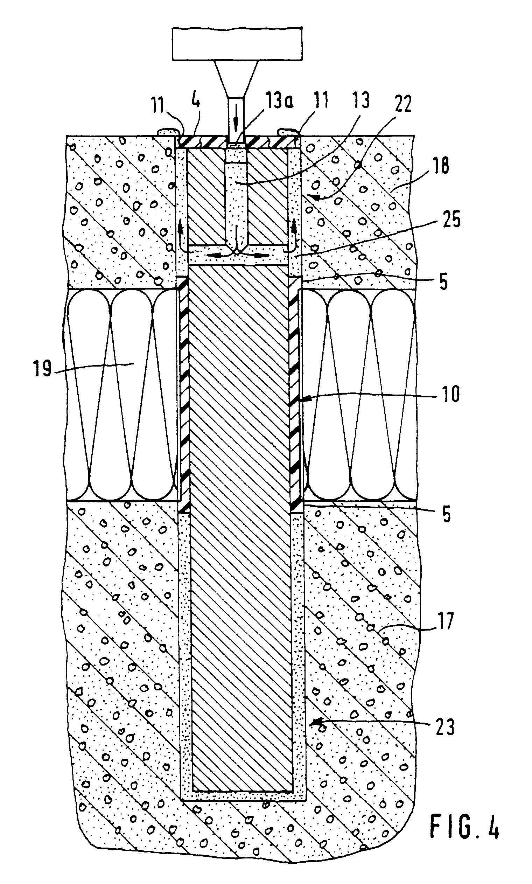

Der in Figur 1 dargestellte Traganker 1 besteht aus einem Bolzen 2, über den ein Kunststoffteil 3 gemäß Figur 2 übergestülpt ist. Der Kunststoffteil 3 weist mehrere Dichtringe 5, die über die Stege 9 und/oder Manschetten 5 in einem Abstand zueinander fixiert sind, auf. Der Abstand zwischen den Dichtringen 5 und/oder Manschetten ist verstellbar. Ferner ist der Kunststoffteil 3 mit einem Kanal 8 versehen. An der Stirnseite des Tragankers 1 befindet sich eine Abschlußscheibe 4, die mit einer Injektionsbohrung 13a und Öffnungen 6, 11 versehen ist. Die Injektionsbohrung 13a fluchtet in die Füllbohrung 13 des Tragankers 1, wie die Figur 4 darstellt. Die Abschlußscheibe 4 ist auch mit Grifflaschen 7 für das radiale und axiale Ausrichten des Tragankers versehen. Nach dem Einführen des Tragankers 1 in das mit der aushärtbaren Masse 25 befüllte Bohrloch 24 in der Tragschale 17, wie die Figur 3 darstellt, wird die Masse durch den Bolzen 2 verdrängt und den durch den Dichtring 5 abgegrenzten hinteren Verankerungsbereich 23 ausfüllen. Die überschüssige Menge der Masse 25 steigt durch den Verbindungskanal 8 über den Dämmbereich 19 in Richtung der Bohrlochmündung und tritt aus der Öffnung 6, die am Rande der Abschlußscheibe 4 angeordnet ist, aus. Durch den Austritt der Masse erhält der Monteur die Sicherheit, daß der hintere Verankerungsbereich 23 vollständig ausgefüllt worden ist. Der Verbindungskanal 8 ist als Längsnut an der Innenseite des Steges 9 und der Manschette 5 angebracht.

Der vordere in der Vorsatzschale 18 angeordnete Verankerungsbereich 22 wird in einem separaten, in der Figur 4 dargestellten Vorgang befüllt. Die aushärtbare Masse 25 wird durch die in der Abschlußscheibe 4 angeordnete Injektionsbohrung 13a, die in der Füllbohrung 13 fluchtet, eingespritzt. Die eingespritzte Masse 25 fließt zunächst ins Bohrlochtiefste, füllt den durch den Dichtring 5 abgegrenzten Verankerungsbereich 22 aus und steigt in Richtung der Bohrlochmündung auf. Der Austritt der Masse 25 durch die in der Abschlußscheibe 4 angebrachten Öffnungen 11 zeigt, daß der vordere Verankerungsbereich 22 ausgefüllt ist.

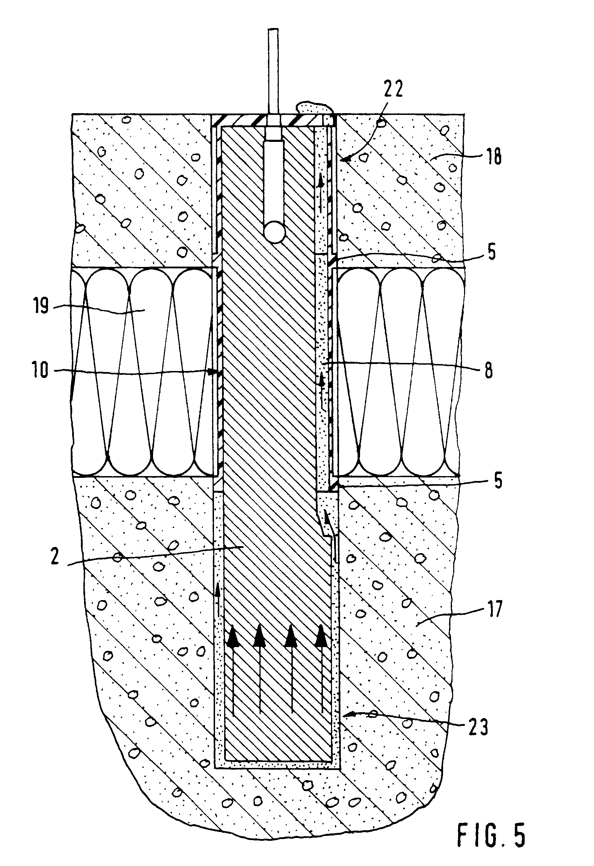

In der Figur 5 ist die Befüllung des hinteren Verankerungsbereiches 23 des Tragsankers 1 dargestellt, wobei der Verbindungskanal 8 als Längsnut auf der Mantelfläche des Tragankers 1 angebracht ist.

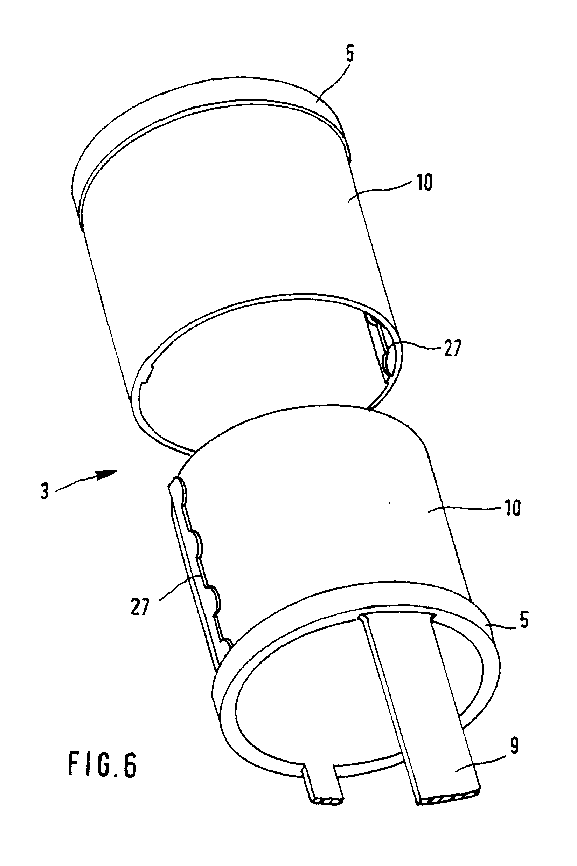

Der in der Figur 6 dargestellte Ausschnitt zeigt das Kunststoffteil 3, das aus zwei Manschetten 5 besteht, die über eine Rastverbindung 27 zusammen verbunden sind. Diese abgewandelte Ausführung des Tragankers ermöglicht, durch die Verschiebung der Manschetten 5, eine erforderliche Anpassung des Kunststoffteils 3 dem jeweiligen, sanierenden Objekt.

## Patentansprüche

1. Traganker zur Befestigung einer Vorsatzschale (18) an einer Tragschale (17) mit durch Dichtringe (5) abgetrennten Verankerungsbereichen (22, 23), die mit einer aushärtbaren, Masse auffüllbar sind, wobei die Dichtringe (5) an einem über den Traganker (1) gestülpten Kunststoffteil (3) angeordnet sind und über Stege (9) und/oder Manschetten 10 in einem Abstand zueinander fixiert sind, **dadurch gekennzeichnet,** dass das Kunststoffteil (3) eine auf der Stirnseite des Tragankers (1) aufliegende Abschlussscheibe (4) mit einer Injektionsbohrung (13a) aufweist, die mit einer in den vorderen Verankerungsbereich (22) mündende Füllbohrung (13) des Tragankers (1) fluchtet, und dass die Abschlussscheibe (4) im Randbereich Öffnungen (6, 11) aufweist, wobei eine der Öffnungen (6) mit dem hinteren Verankerungsbereich (23) und die andere Öffnung (11) mit dem vorderen Verankerungsbereich (22) verbunden ist.

2. Traganker nach Anspruch 1, **dadurch gekennzeichnet**, dass der Abstand der Dichtringe zueinander über teleskopartig zusammenschieb- und verrastbare Stege (9) und/oder Manschetten (10) verstellbar ist.

3. Traganker nach Anspruch 1, **dadurch gekennzeichnet**, dass am Traganker (1) ein vom hinteren Verankerungsbereich (23) ausgehender und bis zur Stirnseite des Tragankers (1) geführter Verbindungskanal (8) angeordnet ist.

4. Traganker nach Anspruch 3, **dadurch gekennzeichne**t, dass der Verbindungskanal (8) als Längsnut ausgebildet ist, die an der Innenseite eines Steges (9) und der Manschette (10) verläuft.

5. Traganker nach Anspruch 1, **dadurch gekennzeichnet**, dass die Abschlussscheibe (4) mit einer axial abstehenden Grifflasche (7) versehen ist.

## Claims

1. Support anchor for fastening a supplementary shell (18) to a support shell (17), having anchoring regions (22, 23) separated by sealing rings (5), which anchoring regions can be filled with a curable compound, the sealing rings (5) being arranged on a plastics member (3) that is placed over the support anchor (1) and being fixed at a distance from one another by means of ribs (9) and/or sleeves (10), **characterised in that** the plastics member (3) has a closure disc (4) that rests on the end face of the support anchor (1) and has an injection bore (13a) which is in alignment with a filling bore (13) in the support anchor (1) that opens into the forward anchoring region (22), and the closure disc (4) has openings (6, 11) in its peripheral region, one of the openings (6) being connected to the rear anchoring region (23) and the other opening (11) being connected to the forward anchoring region (22).

2. Support anchor according to claim 1, **characterised in that** the spacing between the sealing rings can be adjusted by means of ribs (9) and/or sleeves (10) that can be pushed together telescopically and locked in place.

3. Support anchor according to claim 1, **characterised in that** there is arranged on the support anchor (1) a connecting channel (8) that starts from the rear anchoring region (23) and continues as far as the end face of the support anchor (1).

4. Support anchor according to claim 3, **characterised in that** the connecting channel (8) is in the form of a longitudinal groove which extends along the inner side of the rib (9) and the sleeve (10).

5. Support anchor according to claim 1, **characterised in that** the closure disc (4) is provided with an axially projecting grip tab (7).

## Revendications

1. Ancrage de support pour fixer une paroi extérieure (18) à une paroi de support (17), comportant des zones d'ancrage (22, 23) séparées par des bagues d'étanchement (5) et pouvant être emplies d'une masse durcissable, les bagues d'étanchement (5) étant disposées sur une pièce (3) en matière plastique enfilée sur l'ancrage de support (1), et étant fermement consignées à demeure avec espacement mutuel, par l'intermédiaire de membrures (9) et/ou de manchons (10), caractérisé par le fait que la pièce (3) en matière plastique présente un disque obturateur (4). reposant sur la face extrême de l'ancrage de support (1) et muni d'un perçage d'injection (13a) qui coïncide avec un trou d'emplissage (13) dudit ancrage de support (1), débouchant dans la zone antérieure d'ancrage (22) ; et par le fait que le disque obturateur (4) comporte des orifices (6, 11) dans la région marginale, l'un (6) desdits orifices étant relié à la zone postérieure d'ancrage (23), et l'autre orifice (11) étant relié à la zone antérieure d'ancrage (22).

2. Ancrage de support selon la revendication 1, caractérisé par le fait que l'espacement mutuel des bagues d'étanchement peut être ajusté par l'intermédiaire de membrures (9) et/ou de manchons (10) pouvant être rentré(e)s télescopiquement et pouvant être encliqueté(e)s.

3. Ancrage de support selon la revendication 1, caractérisé par le fait qu'un canal de liaison (8), partant de la zone postérieure d'ancrage (23) et s'étendant jusqu'à la face extrême dudit ancrage de support (1), est ménagé sur ledit ancrage de support (1).

4. Ancrage de support selon la revendication 3, caractérisé par le fait que le canal de liaison (8) est réalisé sous la forme d'une saignée longitudinale s'étendant à la face interne d'une membrure (9) et du manchon (10).

5. Ancrage de support selon la revendication 1, caractérisé par le fait que le disque obturateur (4) est pourvu d'une patte de préhension (7) saillant axialement.
